# EUROPEAN PATENT SPECIFICATION

(11) **EP 4 292 039 B1**
(45) Date of publication and mention of the grant of the patent: **03.06.2026**
(21) Application number: 21925280.6
(22) Date of filing: 12.02.2021
(51) Int. Cl.: G09G 5/00, G06T 1/20, G09G 5/14

(54) **COMPOSITION STRATEGY SEARCHING BASED ON DYNAMIC PRIORITY AND RUNTIME STATISTICS**
SUCHE NACH EINER KOMPOSITIONSSTRATEGIE AUF DER BASIS VON DYNAMISCHER PRIORITÄT UND LAUFZEITSTATISTIKEN
RECHERCHE DE STRATÉGIE DE COMPOSITION BASÉE SUR UNE PRIORITÉ DYNAMIQUE ET DES STATISTIQUES D'EXÉCUTION

(43) Date of publication of application: 20.12.2023
(73) Proprietor: QUALCOMM INCORPORATED, San Diego, California 92121-1714 (US)
(72) Inventor: ZHANG, Nan, San Diego, California 92121-1714 (US); XU, Yongjun, San Diego, California 92121-1714 (US); HAN, Long, San Diego, California 92121-1714 (US)
(74) Representative: Pritzlaff, Stefanie Lydia
(86) International application number: PCT/CN2021/076629
(87) International publication number: WO 2022/170621

(56) References cited:
- CN-A- 108 241 211
- CN-A- 111 698 505
- US-A1- 2009 079 763
- US-A1- 2013 129 146
- US-A1- 2017 316 541
- US-A1- 2017 316 541
- US-A1- 2018 189 922
- US-A1- 2019 005 702

## Description

### TECHNICAL FIELD

The present disclosure relates generally to processing systems, and more particularly, to one or more techniques for display processing.

### INTRODUCTION

Computing devices often perform graphics and/or display processing (e.g., utilizing a graphics processing unit (GPU), a central processing unit (CPU), a display processor, etc.) to render and display visual content. Such computing devices may include, for example, computer workstations, mobile phones such as smartphones, embedded systems, personal computers, tablet computers, and video game consoles. GPUs are configured to execute a graphics processing pipeline that includes one or more processing stages, which operate together to execute graphics processing commands and output a frame. A central processing unit (CPU) may control the operation of the GPU by issuing one or more graphics processing commands to the GPU. Modern day CPUs are typically capable of executing multiple applications concurrently, each of which may need to utilize the GPU during execution. A display processor may be configured to convert digital information received from a CPU to analog values and may issue commands to a display panel for displaying the visual content. A device that provides content for visual presentation on a display may utilize a CPU, a GPU, and/or a display processor.

Frame composition procedures may be based on analyzing one or more groups of parameters (e.g., composition groups) in a predetermined order for composing a frame. However, when analysis of the composition groups by the CPU in the predetermined order consumes more time than a runtime of a hardware composer (HWC) implemented by the GPU or the display processor, a frames-per-second (FPS) processing rate may be decreased. Accordingly, there is a need for improved frame composition techniques.
Attention is drawn to US 2017/316541 A1 describing an electronic device which includes a first graphic composer that composes first graphic data associated with a layer of a first composition type, a second graphic composer that composes second graphic data associated with a layer of a second composition type different from the first composition type. The electronic device also includes a processor that sets a composition type of each of a plurality of layers associated with at least one application to the first or second composition type, composes first graphic data corresponding to a layer set to the first composition type using the first graphic composer, compose the composed graphic data in the frame buffer and second graphic data corresponding to a layer set to the second composition type using the second graphic composer, and display the composed graphic data through a display connected with the electronic device.
Attention is further drawn to US 2018/189922 A1 describing that device performance and battery life may be increased by prioritizing access to the display controller hardware overlay support such that the layer(s) placing the greatest potential demand (i.e., those layers that are frequently changing and/or large) on the GPU are instead handled in the display controller hardware overlay support. Device performance and battery life may be further increased by identifying those layer(s) that do not change frame-to-frame and excluding those layer(s) from composition. Attention is further drawn to US 2019/005702 A1 describing a drawing control apparatus which includes: a drawing unit for drawing a plurality of images by executing a plurality of drawing tasks, each given a priority level, in each period; an output unit for combining and outputting the images drawn by the drawing unit in each period; a drawing time estimating unit for estimating a drawing time of each of one or more drawing commands included in a drawing task; and a drawing adjustment unit for planning a sequence for executing the drawing tasks on the basis of the drawing times estimated by the drawing time estimating unit and controlling the drawing unit. The drawing adjustment unit causes the drawing unit to execute the drawing tasks planned to be executed in a current period in descending order of priority and to execute some or all of the drawing commands of drawing tasks that have not been completed by output timing of the current period after execution of drawing tasks with higher priority than the uncompleted drawing tasks in a next period.

### SUMMARY

The present invention is set forth in the independent claims. Preferred embodiments of the invention are described in the dependent claims.

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided. The apparatus may determine, based on a plurality of frames, a usage frequency of each of one or more composition groups, the one or more composition groups used for composing the plurality of frames; assign a priority to each of the one or more composition groups based on the usage frequency; and analyze, as part of a frame composition procedure, at least one of the one or more composition groups in an order that is based on the priority of the one or more composition groups.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a block diagram that illustrates an example content generation system in accordance with one or more techniques of this disclosure.
FIG. 2 is a call flow diagram illustrating example communications between a central processing unit (CPU) and a hardware composer (HWC) in accordance with one or more techniques of this disclosure.
FIG. 3 illustrates diagrams indicative of frame composition procedures in accordance with one or more techniques of this disclosure.
FIG. 4 illustrates an implementation flow for prioritizing composition groups on a device level in accordance with one or more techniques of this disclosure.
FIG. 5 illustrates an implementation flow for prioritizing composition groups on an application level in accordance with one or more techniques of this disclosure.
FIG. 6 is a flowchart of an example method of display processing in accordance with one or more techniques of this disclosure.

### DETAILED DESCRIPTION

Various aspects of systems, apparatuses, computer program products, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of this disclosure to those skilled in the art. Based on the teachings herein one skilled in the art should appreciate that the scope of this disclosure is intended to cover any aspect of the systems, apparatuses, computer program products, and methods disclosed herein, whether implemented independently of, or combined with, other aspects of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. Any aspect disclosed herein may be embodied by one or more elements of a claim.

Although various aspects are described herein, many variations and permutations of these aspects fall within the scope of this disclosure. Although some potential benefits and advantages of aspects of this disclosure are mentioned, the scope of this disclosure is not intended to be limited to particular benefits, uses, or objectives. Rather, aspects of this disclosure are intended to be broadly applicable to different wireless technologies, system configurations, processing systems, networks, and transmission protocols, some of which are illustrated by way of example in the figures and in the following description. The detailed description and drawings are merely illustrative of this disclosure rather than limiting, the scope of this disclosure being defined by the appended claims and equivalents thereof.

Several aspects are presented with reference to various apparatus and methods. These apparatus and methods are described in the following detailed description and illustrated in the accompanying drawings by various blocks, components, circuits, processes, algorithms, and the like (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors (which may also be referred to as processing units). Examples of processors include microprocessors, microcontrollers, graphics processing units (GPUs), general purpose GPUs (GPGPUs), central processing units (CPUs), application processors, digital signal processors (DSPs), reduced instruction set computing (RISC) processors, systems-on-chip (SOCs), baseband processors, application specific integrated circuits (ASICs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software can be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

The term application may refer to software. As described herein, one or more techniques may refer to an application (e.g., software) being configured to perform one or more functions. In such examples, the application may be stored in a memory (e.g., on-chip memory of a processor, system memory, or any other memory). Hardware described herein, such as a processor may be configured to execute the application. For example, the application may be described as including code that, when executed by the hardware, causes the hardware to perform one or more techniques described herein. As an example, the hardware may access the code from a memory and execute the code accessed from the memory to perform one or more techniques described herein. In some examples, components are identified in this disclosure. In such examples, the components may be hardware, software, or a combination thereof. The components may be separate components or sub-components of a single component.

In one or more examples described herein, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

As used herein, instances of the term "content" may refer to "graphical content," an "image," etc., regardless of whether the terms are used as an adjective, noun, or other parts of speech. In some examples, the term "graphical content," as used herein, may refer to a content produced by one or more processes of a graphics processing pipeline. In further examples, the term "graphical content," as used herein, may refer to a content produced by a processing unit configured to perform graphics processing. In still further examples, as used herein, the term "graphical content" may refer to a content produced by a graphics processing unit.

A CPU may search for and/or generate a frame composition procedure for composing a frame. The frame composition procedure may analyze a set of parameters, which may be allocated into one or more composition groups determined via control logic executed by the CPU. The frame composition procedure corresponds to an order in which the composition groups are analyzed by the CPU for determining whether the composition groups may be used to compose the frame. The composition groups may be tables or lists that include a subset of the parameters and which may be used by a hardware composer (HWC) for composing the frame. Composition of the frame may then be performed by different types of hardware devices, such as a display processor (e.g., display processing unit (DPU)), a GPU, the CPU, a DSP, or other similar hardware blocks, based on a priority order of the one or more composition groups. Because each frame may include a plurality of layers associated with a large number of parameters (e.g., 1,000-2,000 parameters), the CPU may execute a strategy-based composition sequence, such as the frame composition procedure, for composing the frame based on allocating/grouping the parameters into the one or more composition groups.

When the priority order of the one or more composition groups is based on hardcoded instructions performed in a predetermined order, the control logic executed on the CPU may consume more time than a runtime of a composer or HWC. As a result, a composition control path associated with executing the control logic may cause a decreased frames-per-second (FPS) processing rate. In particular, the CPU may identify, based on the predetermined priority order, a first composition group associated with the frame composition procedure and, if the first composition group is determined to be unsuitable for composing the frame (e.g., the first composition group takes too long to execute), the CPU may identify, based on the predetermined priority order, a second composition group in the frame composition procedure, and so on, until a suitable composition group is identified. However, in order to prevent the FPS processing rate from being decreased, the CPU may have to prepare the frame composition procedure in an amount of time that is less than or equal to the runtime of the HWC (e.g., associated with a display process, DPU, GPU, etc.).

Accordingly, by configuring the CPU to dynamically change a priority order of the one or more composition groups via statistics and caching, the time for the CPU to prepare the frame composition procedure may be reduced. More specifically, after allocating the set of parameters into the one or more composition groups, a usage frequency may be determined (e.g., over a configured time window) for each of the one or more composition groups based on a statistical analysis. A priority order of the composition groups may be assigned/updated based on the usage frequencies determined from the statistical analysis. In this manner, composition groups having higher priorities may be analyzed before composition groups having lower priorities to reduce the amount of time for the CPU to identify a suitable composition group. The frame composition procedure, including dynamic priority updates based on runtime statistics, may be performed at a device level and/or an application level.

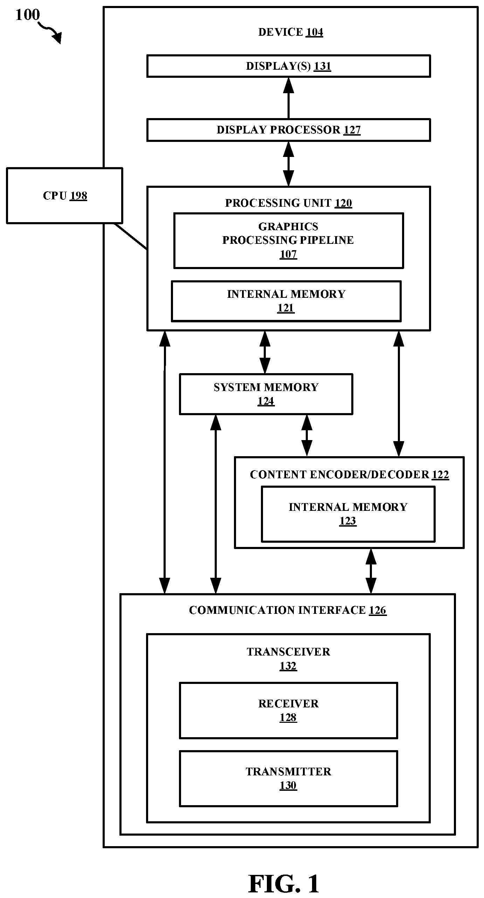

FIG. 1 is a block diagram that illustrates an example content generation system 100 configured to implement one or more techniques of this disclosure. The content generation system 100 includes a device 104. The device 104 may include one or more components or circuits for performing various functions described herein. In some examples, one or more components of the device 104 may be components of a SOC. The device 104 may include one or more components configured to perform one or more techniques of this disclosure. In the example shown, the device 104 may include a processing unit 120, a content encoder/decoder 122, and a system memory 124. In some aspects, the device 104 may include a number of optional components (e.g., a communication interface 126, a transceiver 132, a receiver 128, a transmitter 130, a display processor 127, and one or more displays 131). Display(s) 131 may refer to one or more displays 131. For example, the display 131 may include a single display or multiple displays, which may include a first display and a second display. The first display may be a left-eye display and the second display may be a right-eye display. In some examples, the first display and the second display may receive different frames for presentment thereon. In other examples, the first and second display may receive the same frames for presentment thereon. In further examples, the results of the graphics processing may not be displayed on the device, e.g., the first display and the second display may not receive any frames for presentment thereon. Instead, the frames or graphics processing results may be transferred to another device. In some aspects, this may be referred to as split-rendering.

The processing unit 120 may include an internal memory 121. The processing unit 120 may be configured to perform graphics processing using a graphics processing pipeline 107. The content encoder/decoder 122 may include an internal memory 123. In some examples, the device 104 may include a processor, which may be configured to perform one or more display processing techniques on one or more frames generated by the processing unit 120 before the frames are displayed by the one or more displays 131. While the processor in the example content generation system 100 is configured as a display processor 127, it should be understood that the display processor 127 is one example of the processor and that other types of processors, controllers, etc., may be used as substitute for the display processor 127. The display processor 127 may be configured to perform display processing. For example, the display processor 127 may be configured to perform one or more display processing techniques on one or more frames generated by the processing unit 120. The one or more displays 131 may be configured to display or otherwise present frames processed by the display processor 127. In some examples, the one or more displays 131 may include one or more of a liquid crystal display (LCD), a plasma display, an organic light emitting diode (OLED) display, a projection display device, an augmented reality display device, a virtual reality display device, a head-mounted display, or any other type of display device.

Memory external to the processing unit 120 and the content encoder/decoder 122, such as system memory 124, may be accessible to the processing unit 120 and the content encoder/decoder 122. For example, the processing unit 120 and the content encoder/decoder 122 may be configured to read from and/or write to external memory, such as the system memory 124. The processing unit 120 may be communicatively coupled to the system memory 124 over a bus. In some examples, the processing unit 120 and the content encoder/decoder 122 may be communicatively coupled to the internal memory 121 over the bus or via a different connection.

The content encoder/decoder 122 may be configured to receive graphical content from any source, such as the system memory 124 and/or the communication interface 126. The system memory 124 may be configured to store received encoded or decoded graphical content. The content encoder/decoder 122 may be configured to receive encoded or decoded graphical content, e.g., from the system memory 124 and/or the communication interface 126, in the form of encoded pixel data. The content encoder/decoder 122 may be configured to encode or decode any graphical content.

The internal memory 121 or the system memory 124 may include one or more volatile or non-volatile memories or storage devices. In some examples, internal memory 121 or the system memory 124 may include RAM, static random access memory (SRAM), dynamic random access memory (DRAM), erasable programmable ROM (EPROM), EEPROM, flash memory, a magnetic data media or an optical storage media, or any other type of memory. The internal memory 121 or the system memory 124 may be a non-transitory storage medium according to some examples. The term "non-transitory" may indicate that the storage medium is not embodied in a carrier wave or a propagated signal. However, the term "non-transitory" should not be interpreted to mean that internal memory 121 or the system memory 124 is non-movable or that its contents are static. As one example, the system memory 124 may be removed from the device 104 and moved to another device. As another example, the system memory 124 may not be removable from the device 104.

The processing unit 120 may be a CPU, a GPU, GPGPU, or any other processing unit that may be configured to perform graphics processing. In some examples, the processing unit 120 may be integrated into a motherboard of the device 104. In further examples, the processing unit 120 may be present on a graphics card that is installed in a port of the motherboard of the device 104, or may be otherwise incorporated within a peripheral device configured to interoperate with the device 104. The processing unit 120 may include one or more processors, such as one or more microprocessors, GPUs, ASICs, FPGAs, arithmetic logic units (ALUs), DSPs, discrete logic, software, hardware, firmware, other equivalent integrated or discrete logic circuitry, or any combinations thereof. If the techniques are implemented partially in software, the processing unit 120 may store instructions for the software in a suitable, non-transitory computer-readable storage medium, e.g., internal memory 121, and may execute the instructions in hardware using one or more processors to perform the techniques of this disclosure. Any of the foregoing, including hardware, software, a combination of hardware and software, etc., may be considered to be one or more processors.

The content encoder/decoder 122 may be any processing unit configured to perform content decoding. In some examples, the content encoder/decoder 122 may be integrated into a motherboard of the device 104. The content encoder/decoder 122 may include one or more processors, such as one or more microprocessors, application specific integrated circuits (ASICs), field programmable gate arrays (FPGAs), arithmetic logic units (ALUs), DSPs, video processors, discrete logic, software, hardware, firmware, other equivalent integrated or discrete logic circuitry, or any combinations thereof. If the techniques are implemented partially in software, the content encoder/decoder 122 may store instructions for the software in a suitable, non-transitory computer-readable storage medium, e.g., internal memory 123, and may execute the instructions in hardware using one or more processors to perform the techniques of this disclosure. Any of the foregoing, including hardware, software, a combination of hardware and software, etc., may be considered to be one or more processors.

In some aspects, the content generation system 100 may include an optional communication interface 126. The communication interface 126 may include a receiver 128 and a transmitter 130. The receiver 128 may be configured to perform any receiving function described herein with respect to the device 104. Additionally, the receiver 128 may be configured to receive information, e.g., eye or head position information, rendering commands, and/or location information, from another device. The transmitter 130 may be configured to perform any transmitting function described herein with respect to the device 104. For example, the transmitter 130 may be configured to transmit information to another device, which may include a request for content. The receiver 128 and the transmitter 130 may be combined into a transceiver 132. In such examples, the transceiver 132 may be configured to perform any receiving function and/or transmitting function described herein with respect to the device 104.

Referring again to FIG. 1, in certain aspects, the processing unit 120 may include a CPU 198 configured to determine, based on a plurality of frames, a usage frequency of each of one or more composition groups, the one or more composition groups used for composing the plurality of frames; assign a priority to each of the one or more composition groups based on the usage frequency; and analyze, as part of a frame composition procedure, at least one of the one or more composition groups in an order that is based on the priority of the one or more composition groups. Although the following description may be focused on frame composition procedures, the concepts described herein may be applicable to other similar processing techniques.

A device, such as the device 104, may refer to any device, apparatus, or system configured to perform one or more techniques described herein. For example, a device may be a server, a base station, a user equipment, a client device, a station, an access point, a computer such as a personal computer, a desktop computer, a laptop computer, a tablet computer, a computer workstation, or a mainframe computer, an end product, an apparatus, a phone, a smart phone, a server, a video game platform or console, a handheld device such as a portable video game device or a personal digital assistant (PDA), a wearable computing device such as a smart watch, an augmented reality device, or a virtual reality device, a non-wearable device, a display or display device, a television, a television set-top box, an intermediate network device, a digital media player, a video streaming device, a content streaming device, an in-vehicle computer, any mobile device, any device configured to generate graphical content, or any device configured to perform one or more techniques described herein. Processes herein may be described as performed by a particular component (e.g., a GPU) but in other embodiments, may be performed using other components (e.g., a CPU) consistent with the disclosed embodiments.

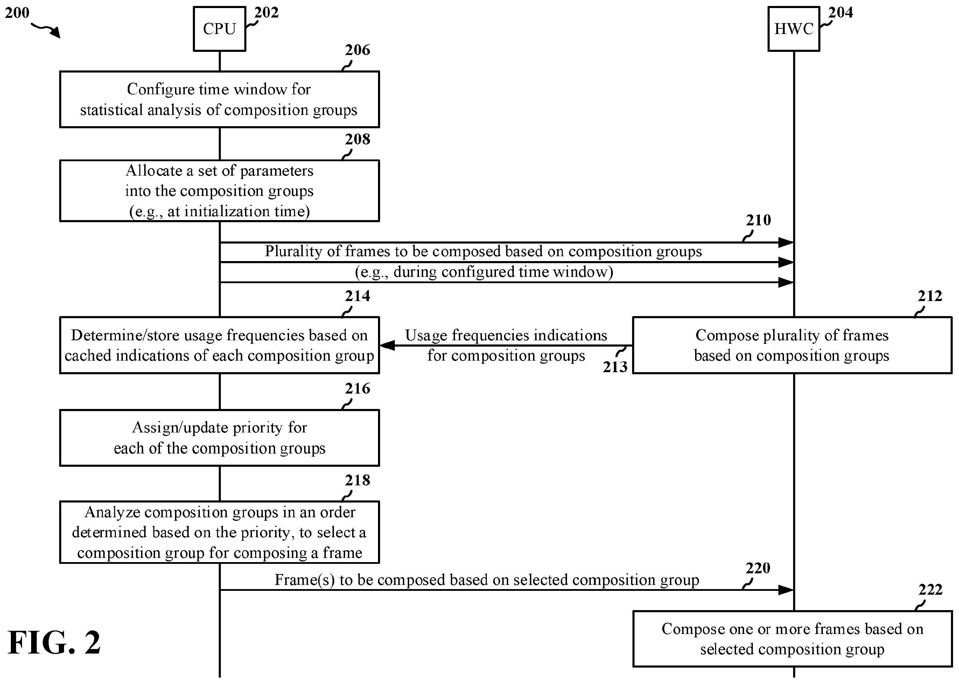

FIG. 2 is a call flow diagram 200 illustrating example communications between a CPU 202 and a HWC 204 in accordance with one or more techniques of this disclosure. In aspects, the HWC 204 may be implemented by a display processor (e.g., a DPU), a GPU, a DSP, or any other hardware device configured to compose a frame, i.e., a composer or a frame composer. In further aspects, the HWC 204 may be implemented by a CPU, which may be a second CPU to the CPU 202, or the HWC may be included in the CPU 202.

At 206, the CPU 202 may configure a time window for performing a statistical analysis of frame composition groups. The time window may be configured at a device level or at an application level. The frame composition groups may each include a plurality of parameters for composing a frame. The time window may also correspond to a time window for caching information determined via the statistical analysis. At 208, the CPU 202 may allocate a set of parameters into different composition groups for performing the statistical analysis. The allocation, at 208, may be performed at an initialization time of a device that includes the CPU 202, or the allocation may be associated with an update to a prior allocation of the set of parameters during runtime.

At 210, the CPU 202 may provide an indication to the HWC 204 to compose a plurality of frames based on the composition groups during the configured time window. More specifically, the CPU 202 may instruct the HWC 204 to compose the plurality of frames over time (e.g., during the configured time window) using the allocated composition groups. The indication, at 210, to compose the plurality of frames may be indicated to the HWC 204 prior to a start of the configured time window.

At 212, the HWC 204 may compose the plurality of frames based on the composition groups. At 213, the HWC 204 may indicate to the CPU 202 usage frequencies for the composition groups. That is, the HWC 204 may indicate to the CPU 202 a number of instances for which each allocated composition group was used for composing a frame. At 214, the CPU 202 determine/store the indicated usage frequencies of each composition group via cached indications of composition group usages. For example, the CPU 202 may cache indications received, at 213, of the composition groups used for composing the plurality of frames by the HWC 204 during the configured time window.

At 216, the CPU 202 may assign a priority to, or update a priority for, each of the composition groups based on the determined usage frequencies of the composition groups. For example, a most frequently used composition group may be assigned a highest priority. At 218, the CPU 202 may analyze the composition groups in an order determined based on the assigned priority of the composition groups to select a composition group for composing a frame. For example, the CPU may analyze a first composition group in the frame composition procedure and, if the first composition group is determined to be unsuitable for composing the frame (e.g., the first composition group takes too long to execute), the CPU may analyze a second composition group in the frame composition procedure, and so on, until a suitable composition group is determined/selected for execution. At 220, the CPU 202 may indicate to the HWC 204 that frame(s) are to be composed based on the composition group selected by the CPU 202 for execution. At 222, the HWC 204 may compose one or more frames based on the selected composition group. While steps 206-210 may be performed at an initialization time, the process illustrated by the call flow diagram 200 may be repeated during runtime for an updated allocation of the set of parameters determined based on the assigned priorities of the composition groups.

Instructions executed by a CPU (e.g., software instructions) may cause the CPU to search for and/or generate a composition strategy for composing a frame based on a dynamic priority and runtime statistics associated with one or more composition strategy groups. A frame to be displayed by a physical display device, such as a display panel, may include a plurality of layers. Also, composition of the frame may be based on combining the plurality of layers into the frame (e.g., based on a frame buffer). After the plurality of layers are combined into the frame, the frame may be provided to the display panel for display thereon. The process of combining each of the plurality of layers into the frame may be referred to as composition, frame composition, a composition procedure, a composition process, or the like.

A frame composition procedure or composition strategy may correspond to a technique for composing different layers of the plurality of layers into a single frame. The plurality of layers may be stored in doubled data rate (DDR) memory. Each layer of the plurality of layers may further correspond to a separate buffer. A composer or HWC associated with a block or function may determine an input of each layer/buffer and perform the frame composition procedure to generate an output indicative of a composed frame. That is, the input may be the layers and the output may be a frame composition procedure for composing the frame to be displayed on the display panel.

Composition may be performed via different hardware and/or types of hardware. For example, composition may be performed in association with a display processor (e.g., DPU), a GPU, and/or a CPU. In some cases, composition may likewise be performed in association with a DSP or other similar hardware blocks. Thus, composition may be performed via a plurality of different hardware or via a single hardware element. The different hardware may perform procedures that cooperate to compose one or more frames. For instance, the display processor and the GPU may cooperate to compose the one or more frames. In a first example, the display processor may compose a first layer of a frame and the GPU may compose the remaining layers of the frame. In a second example, the GPU may compose the first layer of the frame and the display processor may compose the remaining layers of the frame. In a third example, the GPU may compose half of the first layer and the other half of the first layer may be composed by the display processor. Hence, a set of parameters for composing the layers of the frame may be allocated among different hardware in different manners.

The frame composition procedure may be allocated among the different hardware/devices based on the different hardware/devices performing different aspects of the frame composition procedure. For example, the display processor may perform a first aspect of the frame composition and the GPU may perform a second aspect of the frame composition procedure. Determining the allocation of the frame composition procedure may be based on a status of the input (e.g., a status of the different layers) and a status of the output (e.g., a status of a frame to be composed via the frame composition procedure). The input may be indicative of parameters such as resolution, FPS, and other similar parameters. The output may be indicative of the composed frame to be displayed by the display panel. The output may similarly be indicative of the resolution, the FPS, and the other similar parameters.

Control logic may be executed for determining the allocation of the frame composition procedure between different hardware devices. In examples, the control logic may be executed by the CPU, the DSP, or other hardware devices. After the allocation is determined for composing the frame, pixels of the frame may be composed based on the allocation. Because each frame including a plurality of layers may be associated with a large number of parameters (e.g., 1,000 or more parameters), a hardware device, such as the CPU, may search strategy-based composition sequences for composing the frame. For example, the CPU may identify a first composition group associated with the frame composition procedure and, if the first composition group is determined to be unsuitable for composing the frame (e.g., the first composition group may take too long to complete), the CPU may identify a second composition group in the frame composition procedure. If the second composition group is likewise determined to be unsuitable for composing the frame, the CPU may identify a third composition group in the frame composition procedure, and so on, until a suitable composition group is identified. Such techniques may be used to determine a reduced HWC frame composition procedure preparation/searching time.

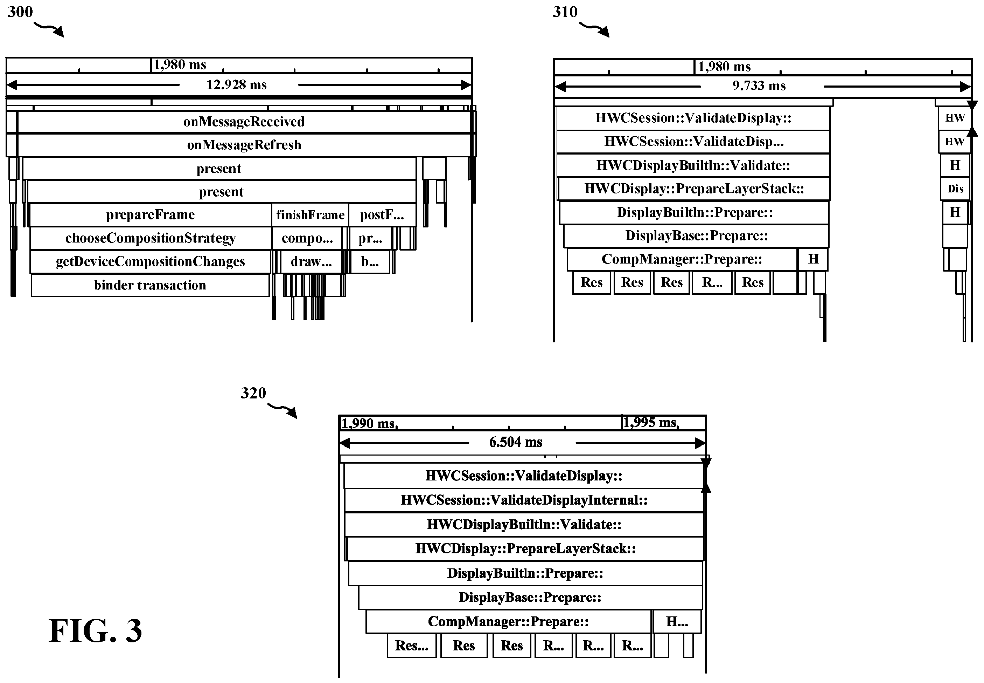

FIG. 3 illustrates diagrams 300-320 indicative of frame composition procedures in accordance with one or more techniques of this disclosure. The diagrams 300 and 310 illustrate instances where control logic/software executed on the CPU consumes more time than a runtime of the display processor (e.g., DPU) or the GPU. In the diagrams 300 and 310, the time for executing the control logic by the CPU ranges from 9.733 ms to 12.928 ms. A HWC composition control path associated with executing the control logic may cause a decrease in the FPS processing rate of 120+ Hz devices. For example, the FPS may be decreased to 77 Hz in some animation, multi-window, and/or multi-layer applications. To decrease FPS reductions, the CPU may have to search for and prepare a composition strategy in 6.504 ms or less, as illustrated in the diagram 320. In some instances, a time for the CPU to prepare a GPU draw call for composition by the GPU may be 1-2 ms, if a subset of the plurality of layers are provided to the GPU for GPU composition.

A composition group search order of the frame composition procedure may be based on hardcoded instructions executed by the hardware devices. For example, a first composition group may correspond to an input/layers and an output/frame for composition strategy A. If composition strategy A is determined by the CPU to be unsuitable for determining the composition group to compose the frame, the CPU may determine whether composition strategy B is suitable for determining the composition group to compose the frame. If composition strategy B is determined by the CPU to be unsuitable for composing the frame, the CPU may determine whether composition strategy C is suitable for determining the composition group to compose the frame, and so on, until a suitable composition strategy is determined by the CPU. The search order of the composition strategies A, B, C, etc., may be predetermined in some cases based on the hardcoded instructions (e.g., software) executed by the CPU. By configuring the CPU to dynamically change a priority and/or search order of the frame composition procedure via statistics and caching, the time for the CPU to search for and/or prepare the frame composition procedure may be reduced.

A set of parameters for composing a frame may be separated into the different composition groups (e.g., categories, lists, tables, etc.) based on a layer number, flags, a resolution, a format, and/or other parameters. After separating the set of parameters into the different composition groups, a composition usage and frequency may be determined for each of the different composition groups based on a statistical analysis. A search priority of the composition groups may be assigned/updated based on the statistical analysis (e.g., based on usage frequencies of the composition groups). For instance, if composition strategy A is used for frame 0 and composition strategy B is used for frame 1, such usages may be cached for performing the statistical analysis. A most recently used composition group (e.g., for frame N) may also be cached and indicated as having a highest search priority. Hence, for frame N+1, preparing the frame composition procedure may be based on cached/indicated priorities, where the composition group having the highest search priority (e.g., a most recently used composition group or a most frequently used composition group) may be evaluated for suitability first.

In examples, the most recently used composition group may be analyzed first, as the most recently used composition group may be assigned the highest priority and, if the most recently used composition group is determined to be unsuitable for composing the frame, a remainder of the composition groups may be analyzed in an order that corresponds to the dynamic priority determined based on the usage frequencies of the composition groups. Thus, composition groups with higher priorities may be analyzed/selected over composition groups with lower priorities. In further examples, the most recently used composition group may be stored in cache for assigning the most recently used composition group a highest priority during the frame composition procedure for a next frame. In still further examples, indications of composition group usages during the configured time window may be stored in the cache. The cache may be cleared at an end of the time window for performing the statistical analysis. A statistics and caching time window may be activated on a per-device level or on a per-application level for determining the usage frequencies of each composition group.

In an example, a search strategy for a frame composition procedure (e.g., table (kTablePrioritizeCache)) may be associated with a predetermined search priority, such as analyzing a TryCacheBased composition group first, analyzing a TryLoadBased composition group second, analyzing a Try Software Defined Environment (SDE) only (TrySDEOnly) composition group third, and analyzing a TryFullSDE composition group fourth. However, using dynamic priority techniques, the search strategy/analysis order of the frame composition procedure for table(kTablePrioritizeCache) may be adjusted based on frame statistics and caching. For example, if TryFullSDE is used for the 10 most recent frames and for 20 percent of the frames composed within the configured time window, and if TryLoadBased is used for 30 percent of the frames composed within the configured time window, and if TryCacheBased is used for 20 percent of the frames composed within the configured time window, and if TrySDEOnly is used for 0.1% of the frames composed within the configured time window, then the searching priority for the frame composition procedure may correspond to the above-listed order (e.g., TryFullSDE first, TryLoadBased second, TryCacheBased third, and TrySDEOnly fourth). Thus, the number of searches performed by the CPU may be reduced from four (4) searches in the predetermined search order case to one (1) search in the dynamic search order case, since the TryFullSDE composition group is indicated as having the highest priority based on the statistical analysis and caching. As a result, an execution time of the hardware device may be reduced (e.g., reduced by up to 80 percent).

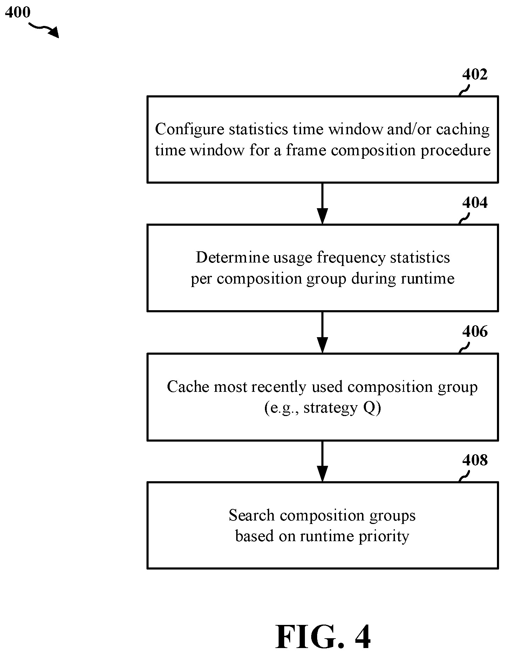

FIG. 4 illustrates an implementation flow 400 for prioritizing composition groups on a device level in accordance with one or more techniques of this disclosure. At 402, a hardware device, such as a CPU, may configure a statistics time window and/or a caching time window for a frame composition procedure. The statistical analysis may be performed over a duration of the statistics time window. The statistics time window (e.g., the configured time window) corresponds to a period of time over which the composition group usages are determined. The caching time window may be used for caching usage instances of the one or more composition groups. The caching time window corresponds to a period of time over which the cache may maintained for the composition group usages. In examples, the caching time window may be the same time window as the statistics time window. While the caching/statistics time windows may be associated with long durations (e.g., days or weeks) before the cache is cleared and/or a next statistical analysis is performed, the caching/statistics time windows may also be configured based on smaller durations (e.g., hours, minutes, seconds, etc.).

At 404, the CPU may determine usage frequency statistics per composition group during runtime. The usage frequency statistics may be determined during the configured statistics time window. Further, the usage frequency statistics may be determined on a device level. That is, cached usages of a specific composition group may correspond to a total number of instances for which the device used the specific composition group, regardless of the application(s) executing on the device that caused the device to use the specific composition group.

At 406, the CPU may cache a most recently used composition group. The most recently used composition group may correspond to strategy Q and may be assigned a highest level of priority. At 408, the CPU may search the composition groups based on the runtime priority assigned to each of the composition groups. After verifying that an analyzed composition group may be utilized for composing a frame, an associated composer or HWC may select and compose the frame based on the composition group.

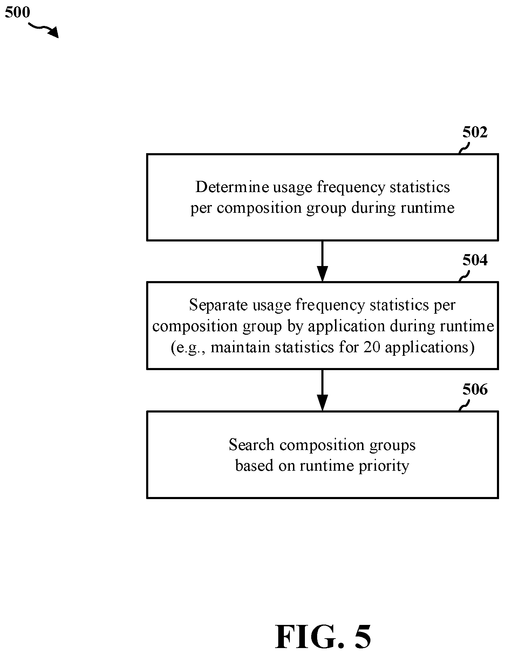

FIG. 5 illustrates an implementation flow 500 for prioritizing composition groups on an application level in accordance with one or more techniques of this disclosure. At 502, a hardware device, such as a CPU, may determine usage frequency statistics per composition group during runtime. The usage frequency statistics may be determined during a configured statistics time window. Further, the usage frequency statistics may be determined on an application level. That is, cached usages of a specific composition group may correspond to a number of instances for which a respective application used the specific composition group.

At 504, the CPU may separate the usage frequency statistics per composition group by application during runtime. For example, statistics may be maintained, based on caching, for 20 different applications executing on the device. Separate frame composition procedures may be executed for each of the different applications based on priorities that may be respectively assigned to the composition groups in association with the different applications. Thus, priorities of the composition groups may be determined based on runtime statistics for the different applications. At 506, the CPU may search the composition groups based on the runtime priority assigned to each of the composition groups. After verifying that an analyzed composition group may be utilized for composing a frame, an associated composer or HWC may select and compose the frame based on the composition group.

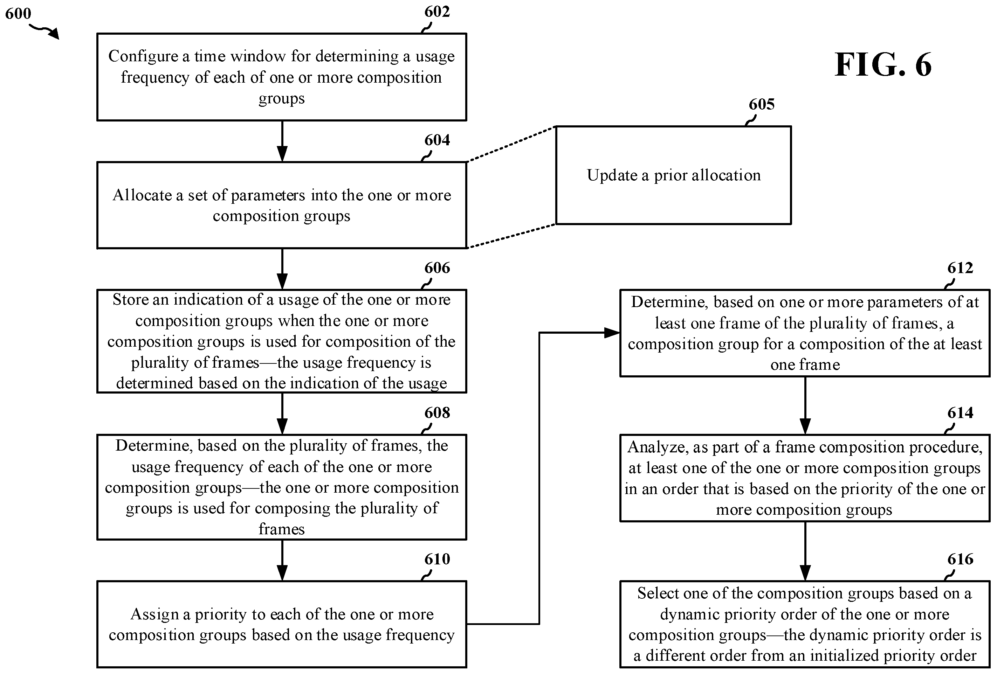

FIG. 6 is a flowchart 600 of an example method of display processing in accordance with one or more techniques of this disclosure. The method may be performed by an apparatus, such as an apparatus for display processing, a CPU, a wireless communication device, and the like, as used in connection with the aspects of FIGs. 1-5.

At 602, the CPU may configure a time window for determining a usage frequency of each of one or more composition groups. For example, referring to FIG. 2, the CPU 202 may configure, at 206, a time window for statistical analysis of composition groups. Processing unit 120 or CPU 198 may also perform 602.

At 604, the CPU may allocate a set of parameters into the one or more composition groups. For example, referring to FIG. 2, the CPU 202 may allocate, at 208, a set of parameters into the composition groups. Processing unit 120 or CPU 198 may also perform 604. The one or more composition groups may be based on at least one of a layer number of the plurality of frames, a flag, a resolution of the plurality of frames, or a format of the plurality of frames. The set of parameters may be allocated, at 208, into the one or more composition groups at an initialization time.

At 605, to allocate the set of parameters into the one or more composition groups, the CPU may update a prior allocation. For example, referring to FIG. 2, the CPU 202 may repeat the process illustrated by the call flow diagram 200 to reallocate the set of parameters based on a second statistical analysis for the one or more frames composed based on selected composition groups. The prior allocation may be the initialized/hardcoded allocation or a prior runtime allocation. Processing unit 120 or CPU 198 may also perform 605.

At 606, the CPU may store an indication of a usage of the one or more composition groups when the one or more composition groups is used for composition of the plurality of frames-the usage frequency is determined based on the indication of the usage. For example, referring to FIG. 2, the CPU 202 may cache indications (e.g., received at 213) of usages of composition groups associated with the plurality of frames composed during the configured time window. Processing unit 120 or CPU 198 may also perform 606. The cached indications may be utilized by the CPU 202 to determine, at 214, the usage frequencies of each composition group.

At 608, the CPU may determine, based on the plurality of frames, the usage frequency of each of the one or more composition groups. For example, referring to FIG. 2, the CPU 202 may determine, at 214, usage frequencies based on the cached indications of each composition group used for composing, at 212, the plurality of frames. Processing unit 120 or CPU 198 may also perform 608.

At 610, the CPU may assign a priority to each of the one or more composition groups based on the usage frequency. For example, referring to FIG. 2, the CPU 202 may assign, at 216, a priority to each of the composition groups (e.g., based on the usage frequencies determined at 214). Processing unit 120 or CPU 198 may also perform 610. A change of the usage frequency of the one or more composition groups corresponds to a change of the priority of the one or more composition groups. The priority for each of the one or more composition groups may be assigned, at 216, on at least one of a device level or an application level. To assign the priority to each of the one or more composition groups, the CPU may update a previous priority of the one or more composition groups. For example, referring to FIG. 2, the CPU 202 may update, at 216, a priority for each of the composition groups. Processing unit 120 or CPU 198 may also perform 610.

At 612, the CPU may determine, based on one or more parameters of at least one frame of the plurality of frames, a composition group for a composition of the at least one frame. For example, referring to FIGs. 2 and 4-5, the CPU may search, at 408 and 506, composition groups for composing a frame based on a runtime priority (e.g., a first/highest priority composition group may be searched first, a second/next highest priority composition group may be search second, etc.). Processing unit 120 or CPU 198 may also perform 612. The first composition group of the one or more composition groups may be selected, at 218, over a second composition group of the one or more composition groups based on the first composition group having a higher priority than the second composition group. The at least one frame may be composed, at 222, by the HWC 204 based on the first composition group when the first composition group is configured for the composition of the at least one frame. In aspects, the at least one frame may be composed by at least one of a display processor (e.g., DPU), a GPU, a CPU, or a DSP.

At 614, the CPU may analyze, as part of a frame composition procedure, at least one of the one or more composition groups in an order that is based on the priority of the one or more composition groups. For example, referring to FIG. 2, the CPU 202 may analyze, at 218, composition groups in an order determined based on the assigned priority. Processing unit 120 or CPU 198 may also perform 614.

At 616, the CPU may select one of the composition groups based on a dynamic priority order of the one or more composition groups-the dynamic priority order is a different order from an initialized priority order. For example, referring to FIG. 2, the CPU 202 may select, at 218, a composition group for composing a frame based on the analysis of the composition groups. The selection, at 218, of the composition group may be based on a dynamic priority order of the one or more composition groups, the dynamic priority order being an order that is different from an initialized priority order (e.g., corresponding to the allocation, at 208, of the set of parameters at an initialization time). In aspects, the CPU may select a second composition group when the first composition group is not configured for the composition of the at least one frame. For example, referring to FIG. 2, the CPU 202 may select, at 218, the second composition group after the first composition group having a higher priority than the second composition group is analyzed and determined by the CPU 202 to not be configured for composing the frame. Processing unit 120 or CPU 198 may also perform 616.

In configurations, a method or an apparatus for display processing is provided. The apparatus may be a CPU. In aspects, the apparatus may be the processing unit 120 and/or the CPU 198 within the device 104, or the apparatus may be some other hardware within the device 104 or another device. The apparatus may include means for determining, based on a plurality of frames, a usage frequency of each of the one or more composition groups, the one or more composition groups used for composing the plurality of frames; means for assigning a priority to each of the one or more composition groups based on the usage frequency; and means for analyzing, as part of a frame composition procedure, at least one of the one or more composition groups in an order that is based on the priority of the one or more composition groups. The means for assigning the priority to each of the one more composition groups may be further configured to update a previous priority of the one or more composition groups.

The apparatus may further include means for configuring a time window for determining the usage frequency of each of the one or more composition groups. The apparatus further includes means for allocating a set of parameters into the one or more composition groups. The means to allocate the set of parameters in the one or more composition groups may be further configured to update a prior allocation. The apparatus may further include means for storing an indication of a usage of the one or more composition groups when the one or more composition groups is used for composing the plurality of frames, the usage frequency being determined based on the indication of the usage. The apparatus may further include means for determining, based on one or more parameters of at least one frame of the plurality of frames, a composition group for composing the at least one frame. The apparatus may further include means for selecting one of the composition groups based on a dynamic priority order of the one or more composition groups, the dynamic priority order being an order that is different from an initialized priority order.

It is understood that the specific order or hierarchy of blocks/steps in the processes, flowcharts, and/or call flow diagrams disclosed herein is an illustration of example approaches. Based upon design preferences, it is understood that the specific order or hierarchy of the blocks/steps in the processes, flowcharts, and/or call flow diagrams may be rearranged. Further, some blocks/steps may be combined and/or omitted. Other blocks/steps may also be added. The accompanying method claims present elements of the various blocks/steps in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects.

Unless specifically stated otherwise, the term "some" refers to one or more and the term "or" may be interpreted as "and/or" where context does not dictate otherwise. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein. The words "module," "mechanism," "element," "device," and the like may not be a substitute for the word "means." As such, no claim element is to be construed as a means plus function unless the element is expressly recited using the phrase "means for."

In one or more examples, the functions described herein may be implemented in hardware, software, firmware, or any combination thereof. For example, although the term "processing unit" has been used throughout this disclosure, such processing units may be implemented in hardware, software, firmware, or any combination thereof. If any function, processing unit, technique described herein, or other module is implemented in software, the function, processing unit, technique described herein, or other module may be stored on or transmitted over as one or more instructions or code on a computer-readable medium.

Computer-readable media may include computer data storage media or communication media including any medium that facilitates transfer of a computer program from one place to another. In this manner, computer-readable media generally may correspond to: (1) tangible computer-readable storage media, which is non-transitory; or (2) a communication medium such as a signal or carrier wave. Data storage media may be any available media that can be accessed by one or more computers or one or more processors to retrieve instructions, code, and/or data structures for implementation of the techniques described in this disclosure. By way of example, and not limitation, such computer-readable media may comprise RAM, ROM, EEPROM, compact disc-read only memory (CD-ROM), or other optical disk storage, magnetic disk storage, or other magnetic storage devices. Disk and disc, as used herein, includes compact disc (CD), laser disc, optical disc, digital versatile disc (DVD), floppy disk, and Blu-ray disc, where disks usually reproduce data magnetically, while discs usually reproduce data optically with lasers. Combinations of the above should also be included within the scope of computer-readable media. A computer program product may include a computer-readable medium.

The techniques of this disclosure may be implemented in a wide variety of devices or apparatuses, including a wireless handset, an integrated circuit (IC) or a set of ICs, e.g., a chip set. Various components, modules or units are described in this disclosure to emphasize functional aspects of devices configured to perform the disclosed techniques, but do not necessarily need realization by different hardware units. Rather, as described above, various units may be combined in any hardware unit or provided by a collection of inter-operative hardware units, including one or more processors as described above, in conjunction with suitable software and/or firmware. Accordingly, the term "processor," as used herein may refer to any of the foregoing structure or any other structure suitable for implementation of the techniques described herein. Also, the techniques may be fully implemented in one or more circuits or logic elements.

The following aspects are illustrative only and may be combined with other aspects or teachings described herein, without limitation.

Aspect 1 is a method of display processing, comprising: determining, based on a plurality of frames, a usage frequency of each of one or more composition groups, the one or more composition groups used for composing the plurality of frames; assigning a priority to each of the one or more composition groups based on the usage frequency; and analyzing, as part of a frame composition procedure, at least one of the one or more composition groups in an order that is based on the priority of the one or more composition groups.

Aspect 2 may be combined with aspect 1 and further includes configuring a time window for determining the usage frequency of each of the one or more composition groups.

Aspect 3 may be combined with any of aspects 1-2 and further includes allocating a set of parameters into the one or more composition groups.

Aspect 4 may be combined with any of aspects 1-3 and includes that the set of parameters is allocated into the one or more composition groups at an initialization time.

Aspect 5 may be combined with any of aspects 1-3 and includes that allocating the set of parameters into the one or more composition groups further includes updating a prior allocation.

Aspect 6 may be combined with any of aspects 1-5 and includes that the one or more composition groups is based on at least one of a layer number of the plurality of frames, a flag, a resolution of the plurality of frames, or a format of the plurality of frames.

Aspect 7 may be combined with any of aspects 1-6 and further includes storing an indication of a usage of the one or more composition groups when the one or more composition groups is used for composing the plurality of frames, the usage frequency being determined based on the indication of the usage.

Aspect 8 may be combined with any of aspects 1-7 and includes that the priority for each of the one or more composition groups is assigned on at least one of a device level or an application level.

Aspect 9 may be combined with any of aspects 1-8 and includes that a change of the usage frequency of the one or more composition groups corresponds to a change of the priority of the one or more composition groups.

Aspect 10 may be combined with any of aspects 1-9 and further includes determining, based on one or more parameters of at least one frame of the plurality of frames, a composition group for composing the at least one frame.

Aspect 11 may be combined with any of aspects 1-10 and includes that the at least one frame is composed by at least one of a display processor (e.g., DPU), a GPU, a CPU, or a DSP.

Aspect 12 may be combined with any of aspects 1-11 and further includes selecting one of the composition groups based on a dynamic priority order of the one or more composition groups, the dynamic priority order being an order that is different from an initialized priority order.

Aspect 13 is an apparatus for display processing including at least one processor coupled to a memory and configured to implement a method as in any of aspects 1-12.

Aspect 14 may be combined with aspect 13 and includes that the apparatus is a wireless communication device.

Aspect 15 is an apparatus for display processing including means for implementing a method as in any of aspects 1-12.

Aspect 16 is a computer-readable medium storing computer executable code, the code when executed by at least one processor causes the at least one processor to implement a method as in any of aspects 1-12.

## Claims

1. A method (600) of display processing, comprising:
allocating (208, 604) a set of parameters into composition groups;
assigning a priority of each of the composition groups;
composing (210) at least one frame based on the composition groups by at least one of a display processor (127), a graphics processing unit, GPU (107), a central processing unit, CPU (198, 202), or a digital signal processor, DSP;
determining (214, 608), based on a plurality of frames, a usage frequency of each of the composition groups;
updating (216, 610) a priority of each of the composition groups based on the determined usage frequencies of the composition groups;
analyzing (218, 614), as part of a frame composition procedure, at least one of the composition groups in an order that is based on the priority of the composition groups until a suitable composition group is determined; and
selecting (220, 222, 616) the suitable composition group,
generating a composition strategy based on the selected composition group, and
composing one or more frames according to the generated composition strategy.

2. The method of claim 1, further comprising configuring a time window for determining the usage frequency of each of the composition groups.

3. The method of claim 1, wherein the set of parameters is allocated into the composition groups at an initialization time.

4. The method of claim 1, wherein allocating the set of parameters into the composition groups includes updating a prior allocation.

5. The method of claim 1, wherein the composition groups is based on at least one of a layer number of the plurality of frames, a flag, a resolution of the plurality of frames, or a format of the plurality of frames.

6. The method of claim 1, further comprising storing an indication of a usage of the composition groups when the composition groups is used for the composing the plurality of frames, the usage frequency being determined based on the indication of the usage.

7. The method of claim 1, wherein the priority for each of the composition groups is assigned on at least one of a device level or an application level.

8. The method of claim 1, wherein a change of the usage frequency of the composition groups corresponds to a change of the priority of the composition groups.

9. The method of claim 1, further comprising determining, based on one or more parameters of at least one frame of the plurality of frames, a composition group for composing the at least one frame.

10. The method of claim 1, further comprising selecting one of the composition groups based on a dynamic priority order of the composition groups, the dynamic priority order being an order that is different from an initialized priority order.

11. An apparatus for display processing, comprising:
a memory; and
at least one processor coupled to the memory and configured to:
allocate a set of parameters into composition groups;
assign a priority of each of the composition groups;
compose at least one frame based on the composition groups by at least one of a display processor, a graphics processing unit, GPU, a central processing unit, CPU, or a digital signal processor, DSP;
determine, based on a plurality of frames, a usage frequency of each of the composition groups;
update a priority of each of the composition groups based on the determined usage frequencies of the composition groups;
analyze, as part of a frame composition procedure, at least one of the composition groups in an order that is based on the priority of the composition groups until a suitable composition group is determined; and
select the suitable composition group,
generating a composition strategy based on the selected composition group, and
composing one or more frames according to the generated composition strategy.

12. The apparatus of claim 11, wherein the apparatus is a wireless communication device.

13. A computer-readable medium storing computer executable code, the code when executed by at least one processor, causes the at least one processor to:
allocate a set of parameters into composition groups;
assign a priority of each of the composition groups;
compose at least one frame based on the composition groups by at least one of a display processor, a graphics processing unit, GPU, a central processing unit, CPU, or a digital signal processor, DSP;
determine, based on a plurality of frames, a usage frequency of each of the composition groups;
update a priority of each of the composition groups based on the determined usage frequencies of the composition groups;
analyze, as part of a frame composition procedure, at least one of the composition groups in an order that is based on the priority of the composition groups until a suitable composition group is determined; and
select the suitable composition group,
generating a composition strategy based on the selected composition group, and
composing one or more frames according to the generated composition strategy.

## Patentansprüche

1. Ein Verfahren (600) zur Anzeigeverarbeitung, das Folgendes aufweist:
Zuteilen (208, 604) eines Satzes von Parametern in Zusammensetzungs- bzw. Kompositionsgruppen;
Zuweisen einer Priorität zu jeder der Kompositionsgruppen;
Komponieren bzw. Zusammensetzen (210) wenigstens eines Frames basierend auf den Kompositionsgruppen durch wenigstens einen Anzeigeprozessor (127), eine Grafikverarbeitungseinheit bzw. GPU (GPU = graphics processing unit) (107), eine zentrale Verarbeitungseinheit bzw. CPU (CPU = central processing unit) (198, 202) oder einen Digitalsignalprozessor bzw. DSP (DSP = digital signal processor);
Bestimmen (214, 608), basierend auf einer Vielzahl von Frames, einer Nutzungsfrequenz von jeder der Kompositionsgruppen;
Aktualisieren (216, 610) einer Priorität jeder der Kompositionsgruppen basierend auf den bestimmten Nutzungsfrequenzen der Kompositionsgruppen;
Analysieren (218, 614), als Teil einer Frame-Kompositionsprozedur bzw. Frame-Zusammensetzungsprozedur, wenigstens einer der Kompositionsgruppen in einer Reihenfolge, die auf der Priorität der Kompositionsgruppen basiert, bis eine geeignete Kompositionsgruppe bestimmt ist; und
Auswählen (220, 222, 616) der geeigneten Kompositionsgruppe,
Generieren einer Kompositionsstrategie basierend auf der ausgewählten Kompositionsgruppe, und
Komponieren bzw. Zusammensetzen von einem oder mehreren Frames gemäß der generierten Kompositionsstrategie.

2. Verfahren nach Anspruch 1, das weiter Konfigurieren eines Zeitfensters zum Bestimmen der Nutzungsfrequenz für jede der Kompositionsgruppen aufweist.

3. Verfahren nach Anspruch 1, wobei der Satz von Parametern zu einer Initialisierungszeit in die Kompositionsgruppen zugeteilt wird.

4. Verfahren nach Anspruch 1, wobei Zuteilen des Satzes von Parametern in die Kompositionsgruppen Aktualisieren einer früheren Zuteilung aufweist.

5. Verfahren nach Anspruch 1, wobei die Kompositionsgruppen auf wenigstens einem von Folgendem basieren: einer Schichtanzahl der Vielzahl von Frames, einem Flag, einer Auflösung der Vielzahl von Frames oder einem Format der Vielzahl von Frames.

6. Verfahren nach Anspruch 1, das weiter Speichern einer Anzeige einer Nutzung der Kompositionsgruppen aufweist, wenn die Kompositionsgruppen für das Zusammensetzen der Vielzahl von Frames genutzt werden, wobei die Nutzungsfrequenz basierend auf der Anzeige der Nutzung bestimmt wird.

7. Verfahren nach Anspruch 1, wobei die Priorität für jede der Kompositionsgruppen wenigstens einem von einer Geräte- bzw. Einrichtungsebene oder einer Anwendungsebene zugewiesen ist.

8. Verfahren nach Anspruch 1, wobei eine Änderung der Nutzungsfrequenz der Kompositionsgruppen einer Änderung der Priorität der Kompositionsgruppen entspricht.

9. Verfahren nach Anspruch 1, das weiter Bestimmen, basierend auf einem oder mehreren Parametern, wenigstens eines Frames der Vielzahl von Frames, einer Kompositionsgruppe zum Komponieren bzw. Zusammensetzen des wenigstens einen Frames aufweist.

10. Verfahren nach Anspruch 1, das weiter Auswählen einer der Kompositionsgruppen basierend auf einer dynamischen Prioritätsreihenfolge der Kompositionsgruppen aufweist, wobei die dynamische Prioritätsreihenfolge eine Reihenfolge ist, die sich von einer initialisierten Prioritätsreihenfolge unterscheidet.

11. Eine Vorrichtung zur Anzeigeverarbeitung, die Folgendes aufweist:
einen Speicher; und
wenigstens einen Prozessor, der an den Speicher gekoppelt ist und konfiguriert ist zum:
Zuteilen eines Satzes von Parametern in Zusammensetzungs- bzw. Kompositionsgruppen;
Zuweisen einer Priorität zu jeder der Kompositionsgruppen;
Komponieren bzw. Zusammensetzen wenigstens eines Frames basierend auf den Kompositionsgruppen durch wenigstens einen Anzeigeprozessor, eine Grafikverarbeitungseinheit bzw. GPU (GPU = graphics processing unit), eine zentrale Verarbeitungseinheit bzw. CPU (CPU = central processing unit) (198, 202) oder einen Digitalsignalprozessor bzw. DSP (DSP = digital signal processor);
Bestimmen, basierend auf einer Vielzahl von Frames, eine Nutzungsfrequenz von jeder der Kompositionsgruppen;
Aktualisieren einer Priorität jeder der Kompositionsgruppen basierend auf den bestimmten Nutzungsfrequenzen der Kompositionsgruppen;
Analysieren, als Teil einer Frame-Kompositionsprozedur bzw. Frame-Zusammensetzungsprozedur, wenigstens einer der Kompositionsgruppen in einer Reihenfolge, die auf der Priorität der Kompositionsgruppen basiert, bis eine geeignete Kompositionsgruppe bestimmt ist; und
Auswählen der geeigneten Kompositionsgruppe,
Generieren einer Kompositionsstrategie basierend auf der ausgewählten Kompositionsgruppe, und
Komponieren bzw. Zusammensetzen von einem oder mehreren Frames gemäß der generierten Kompositionsstrategie.

12. Vorrichtung nach Anspruch 11, wobei die Vorrichtung eine Drahtloskommunikationseinrichtung ist.

13. Ein computerlesbares Medium, das von einem Computer ausführbaren Code speichert, wobei der Code, wenn er durch wenigstens einen Prozessor ausgeführt wird, den wenigstens einen Prozessor veranlasst zum:
Zuteilen eines Satzes von Parametern in Zusammensetzungs- bzw. Kompositionsgruppen;
Zuweisen einer Priorität zu jeder der Kompositionsgruppen;
Komponieren bzw. Zusammensetzen wenigstens eines Frames basierend auf den Kompositionsgruppen durch wenigstens einen Anzeigeprozessor, eine Grafikverarbeitungseinheit bzw. GPU (GPU = graphics processing unit), eine zentrale Verarbeitungseinheit bzw. CPU (CPU = central processing unit) oder einen Digitalsignalprozessor bzw. DSP (DSP = digital signal processor);
Bestimmen, basierend auf einer Vielzahl von Frames, eine Nutzungsfrequenz von jeder der Kompositionsgruppen;
Aktualisieren einer Priorität jeder der Kompositionsgruppen basierend auf den bestimmten Nutzungsfrequenzen der Kompositionsgruppen;
Analysieren, als Teil einer Frame-Kompositionsprozedur bzw. Frame-Zusammensetzungsprozedur, wenigstens einer der Kompositionsgruppen in einer Reihenfolge, die auf der Priorität der Kompositionsgruppen basiert, bis eine geeignete Kompositionsgruppe bestimmt ist; und
Auswählen der geeigneten Kompositionsgruppe,
Generieren einer Kompositionsstrategie basierend auf der ausgewählten Kompositionsgruppe, und
Komponieren bzw. Zusammensetzen von einem oder mehreren Frames gemäß der generierten Kompositionsstrategie.

## Revendications

1. Procédé (600) de traitement d'affichage, comprenant :
l'attribution (208, 604) d'un ensemble de paramètres à des groupes de composition ;
l'affectation d'une priorité à chacun des groupes de composition ;
la composition (210) d'au moins une image sur la base des groupes de composition par au moins un parmi un processeur d'affichage (127), une unité de traitement graphique, GPU, (107) une unité centrale de traitement, CPU, (198, 202) ou un processeur de signal numérique, DSP ;
la détermination (214, 608), sur la base d'une pluralité d'images, d'une fréquence d'utilisation de chacun des groupes de composition ;
la mise à jour (216, 610) d'une priorité de chacun des groupes de composition sur la base de fréquences d'utilisation déterminées des groupes de composition ; et
l'analyse (218, 614), au sein d'une procédure de composition d'images, d'au moins un des groupes de composition dans un ordre basé sur la priorité des groupes de composition jusqu'à ce qu'un groupe de composition approprié soit déterminé ; et
la sélection (220, 222, 616) du groupe de composition approprié,
la génération d'une stratégie de composition sur la base du groupe de composition sélectionné, et
la composition d'une ou de plusieurs images en fonction de la stratégie de composition générée.

2. Procédé selon la revendication 1, comprenant en outre la configuration d'une fenêtre temporelle pour déterminer la fréquence d'utilisation de chacun des groupes de composition.

3. Procédé selon la revendication 1, dans lequel l'ensemble de paramètres est attribué aux groupes de composition à un moment d'initialisation.

4. Procédé selon la revendication 1, dans lequel l'attribution de l'ensemble de paramètres à des groupes de composition comporte la mise à jour d'une attribution antérieure.

5. Procédé selon la revendication 1, dans lequel les groupes de composition sont basés sur au moins un parmi un numéro de couche de la pluralité d'images, un indicateur, une résolution de la pluralité d'images ou un format de la pluralité d'images.

6. Procédé selon la revendication 1, comprenant en outre le stockage d'une indication d'utilisation des groupes de composition lorsque les groupes de composition sont utilisés pour la composition de la pluralité d'images, la fréquence d'utilisation étant déterminée sur la base de l'indication d'utilisation.

7. Procédé selon la revendication 1, dans lequel la priorité de chacun des groupes de composition est affectée à au moins un parmi un niveau du dispositif ou un niveau de l'application.

8. Procédé selon la revendication 1, dans lequel une modification de la fréquence d'utilisation des groupes de composition correspond à une modification de la priorité des groupes de composition.

9. Procédé selon la revendication 1, comprenant en outre la détermination, sur la base d'un ou de plusieurs paramètres d'au moins une image parmi la pluralité d'images, d'un groupe de composition pour composer l'au moins une image.

10. Procédé selon la revendication 1, comprenant en outre la sélection de l'un des groupes de composition sur la base d'un ordre de priorité dynamique des groupes de composition, l'ordre de priorité dynamique étant un ordre différent d'un ordre de priorité initialisé.

11. Appareil de traitement d'affichage, comprenant :
une mémoire ; et
au moins un processeur relié à la mémoire et configuré pour :
attribuer un ensemble de paramètres à des groupes de composition ;
affecter une priorité à chacun des groupes de composition ;
composer au moins une image sur la base des groupes de composition par au moins un parmi un processeur d'affichage (127), une unité de traitement graphique, GPU, (107) une unité centrale de traitement, CPU, (198, 202) ou un processeur de signal numérique, DSP ;
déterminer, sur la base d'une pluralité d'images, une fréquence d'utilisation de chacun des groupes de composition ;
mettre à jour une priorité de chacun des groupes de composition sur la base des fréquences d'utilisation déterminées des groupes de composition ;
analyser, au sein d'une procédure de composition d'images, au moins un des groupes de composition dans un ordre basé sur la priorité des groupes de composition jusqu'à ce qu'un groupe de composition approprié soit déterminé ; et
sélectionner le groupe de composition approprié,
générer une stratégie de composition sur la base du groupe de composition sélectionné, et
composer une ou plusieurs images en fonction de la stratégie de composition générée.

12. Appareil selon la revendication 11, dans lequel l'appareil est un dispositif de communication sans fil.

13. Support lisible par ordinateur stockant du code exécutable par ordinateur, le code, lorsqu'il est exécuté par au moins un processeur, amenant l'au moins un processeur à :
attribuer un ensemble de paramètres à des groupes de composition ;
affecter une priorité à chacun des groupes de composition ;
composer au moins une image sur la base des groupes de composition par au moins un parmi un processeur d'affichage (127), une unité de traitement graphique, GPU, (107) une unité centrale de traitement, CPU, (198, 202) ou un processeur de signal numérique, DSP ;
déterminer, sur la base d'une pluralité d'images, une fréquence d'utilisation de chacun des groupes de composition ;
mettre à jour une priorité de chacun des groupes de composition sur la base des fréquences d'utilisation déterminées des groupes de composition ;
analyser, au sein d'une procédure de composition d'images, au moins un des groupes de composition dans un ordre basé sur la priorité des groupes de composition jusqu'à ce qu'un groupe de composition approprié soit déterminé ; et
sélectionner le groupe de composition approprié,
générer une stratégie de composition sur la base du groupe de composition sélectionné, et
composer une ou plusieurs images en fonction de la stratégie de composition générée.
